# EUROPÄISCHE PATENTSCHRIFT

(11) **EP 3 347 688 B1**
(45) Veröffentlichungstag und Bekanntmachung des Hinweises auf die Patenterteilung: **15.06.2022**
(21) Anmeldenummer: 16753249.8
(22) Anmeldetag: 12.08.2016
(51) Int. Cl.: G01L 19/06, G01L 19/14

(54) **SENSOREINRICHTUNG, INSBESONDERE FÜR MARITIME ANWENDUNGEN**
SENSOR DEVICE PARTICULARLY FOR MARITIME APPLICATIONS
DISPOSITIF DÉTECTEUR, NOTAMMENT POUR DES APPLICATIONS MARITIMES

(30) Priorität: 12.09.2015 DE 102015011974
(43) Veröffentlichungstag der Anmeldung: 18.07.2018
(73) Patentinhaber: Hydac Electronic GmbH, 66128 Saarbrücken (DE)
(72) Erfinder: MORSCH, Joachim, 66646 Marpingen (DE); ERATH, Tobias, 57220 Niedervisse (FR)
(74) Vertreter: Bartels, Martin Erich Arthur
(86) Internationale Anmeldenummer: PCT/EP2016/001388
(87) Internationale Veröffentlichungsnummer: WO 2017/041873

(56) Entgegenhaltungen:
- EP-A1- 1 128 172
- EP-A1- 2 423 656
- EP-A2- 1 275 951
- WO-A1-03/081197
- GB-A- 1 218 672
- US-A1- 2005 204 823

## Beschreibung

Die Erfindung betrifft eine Sensoreinrichtung, insbesondere für maritime Anwendungen, mit den Merkmalen im Oberbegriff von Anspruch 1. Die Erfindung bezieht sich ferner auf die Verwendung einer derartigen Drucksensoreinrichtung bei Tiefwasseranwendungen.

In Tiefwasseranwendungen werden Hydraulik-Funktionseinheiten eingesetzt, wie Bohrlochsicherungsgarnituren (engl. blowout preventer, BOP) oder ferngesteuerte Fahrzeuge (engl. remotely operated vehicle, ROV). In diesen Hydraulik-Funktionseinheiten platziert man Sensoren, Ventile usw. in einer auf Meeresdruckniveau durch Kompensatoren druckausgeglichenen, ölgefüllten Kammer (engl. compensated chamber).

Sensoreinrichtungen, die zur Ermittlung von Mediendrücken Drucksensoren aufweisen, sind Stand der Technik, vgl. beispielsweise DE 102 12 767 A1. Insbesondere kommen derartige Einrichtungen bei Systemen, die Druckfluide als Arbeitsmedien benutzen, zum Einsatz, um eine Überwachung des Systemdrucks durchzuführen. Da sich bei einem gekapselten System der Umgebungsdruck auf den Systemdruck addiert, ergibt sich die Schwierigkeit, dass der Drucksensor bei hohen Umgebungsdrücken auf ein gegebenenfalls sehr hohes Druckniveau auszulegen ist, obwohl ein gegenüber dem Umgebungsdruck weit niedrigeres Systemdruckniveau zu überwachen ist und man dementsprechend nur einen geringen Teil des Messbereichs des Drucksensors ausnutzen kann. Zur Lösung dieses Problems ist es Stand der Technik, das Sensorgehäuse auf Umgebungsdruck zu bringen, so dass der Drucksensor einerseits mit dem Umgebungsdruck und andererseits mit dem Systemdruck beaufschlagt ist und dadurch lediglich den Systemdruck misst. Bei Sensoreinrichtungen, die dem Umgebungsluftdruck ausgesetzt sind, wird hierbei so vorgegangen, dass der Druckausgleich zwischen Außenluft und im Sensorgehäuse befindlicher Luft über eine gasdurchlässige Druckausgleichs-Membran erfolgt. Derartige Be- und Entlüftungsmembranen, sog. DAMs, sind in Form hydrophob-oleophober PTFE-Membranen im Handel erhältlich. Bei Anwendungen, bei denen sich die Sensoreinrichtung unter Wasser befindet, ist dieses Vorgehen nicht praktikabel, weil wegen der Kompressibilität von Luft oder Stickstoffgas im Gehäuse keine ausreichende Abstützung der Membran gegeben ist und hohe Differenzdrücke an der Membran daher zum Wassereintritt ins Gehäuse führen und die dem Sensor zugehörige Elektronik schädigen.

Die EP 1 275 951 A2 beschreibet einer Sensoreinrichtung, insbesondere für maritime Anwendungen, mit einem Gehäuse, das einen Druckanschluss aufweist, der zu einem Drucksensor führt, der mittels einer Übertragungseinrichtung Messdaten übermittelt, und das mindestens eine schließbare Durchgangsöffnung aufweist zum Verbinden der Umgebung mit zumindest Teilen des Gehäuseinneren, in dem der Drucksensor angeordnet ist, wobei der Drucksensor von einem inkompressiblen Medium umgeben ist, das mittels einer elastisch nachgiebigen und mediendichten Trenneinrichtung von der Umgebung separiert ist.

Weitere Sensoreinrichtungen gehen aus der US 2005/0204823 A1, der EP 2 423 656 A1, der GB 1 218 672, der WO 03/081197 A1 und der EP 1 128 172 A1 hervor.

Im Hinblick auf diese Problematik liegt der Erfindung die Aufgabe zugrunde, eine Sensoreinrichtung der eingangs genannten Gattung zur Verfügung zu stellen, die den betriebssicheren Einsatz bei umgebendem Flüssigkeitsdruck, beispielsweise Seewasserdruck in einer sogenannten compensated chamber (ölgefüllte Hydraulikkammer auf Meeresdruck angeglichen), ermöglicht.

Erfindungsgemäß ist diese Aufgabe durch eine Sensoreinrichtung gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass die Trenneinrichtung in Form einer Rollmembran ausgebildet ist, von der, an einer Umlenkstelle umgelegt, ein napfartiges Innenteil in eine topfartige Erweiterung eines Aufnahmeteils zumindest in einem Ausgangszustand der Membran eingreift.

Es ist ferner vorgesehen, dass der Drucksensor von einem weitgehend inkompressiblen Medium umgeben ist, das mittels einer elastisch nachgiebigen und mediendichten Trenneinrichtung von der Umgebung separiert ist. Als inkompressibles Medium, mit dem im Gehäuse eine den Drucksensor enthaltende Kammer befüllt ist, die durch die nachgiebige, mediendichte Trenneinrichtung gegenüber der Umgebung abgeschlossen ist, ist mit Vorteil ein Öl, wie Silikon-Öl oder Trafo-Öl, vorgesehen oder auch ein andersartiges inkompressibles Füllmaterial, etwa in Form eines Gels oder eines Vergussmaterials. Die erfindungsgemäße Sensoreinrichtung ist dadurch auf betriebssichere Weise auch bei Tiefwasseranwendungen, wie in BOPs oder ROVs einsetzbar, etwa am Meeresgrund in einer Tiefe von etwa 4000 Metern mit einem Umgebungsdruck von 400 bar oder mehr.

Die Übertragungseinrichtung kann eine Platine aufweisen, an die der Drucksensor angeschlossen ist, sowie Verbindungskabel, mit denen die Platine an eine Auswerteeinrichtung anschließbar ist. Alternativ kann auch eine kabellose Funkübertragung vorgesehen sein.

Als Werkstoff für die Rollmembran kann in vorteilhafter Weise ein Elastomer, wie ein Nitril-Butadien-Kautschuk, vorgesehen sein.

Mit besonderem Vorteil kann die Anordnung so getroffen sein, dass die als elastisch nachgiebige Rollmembran ausgebildete Trenneinrichtung mit ihrem freien Rand in einer Aufnahmekammer des hülsenförmigen Aufnahmeteils festgelegt ist, die permanent dem Umgebungsdruck ausgesetzt ist. Dabei kann das topfartige Aufnahmeteil für die Membran in einer Trennwand des Gehäuses und diese durchgreifend mittig angeordnet sein, wobei die Trennwand zumindest eine, vorzugsweise mit einer Dichtschraube verschließbare, Durchgangsöffnung aufweist.

Diese Trennwand kann von Verbindungskabeln der Übertragungseinrichtung für die vom Drucksensor ermittelten Messdaten durchgriffen sein.

Bei besonders vorteilhaften Ausführungsbeispielen schließt sich an die Trennwand des Gehäuses, die in Richtung des Drucksensors das Gehäuseinnere mittels der jeweiligen Dichtschraube dichtend abschließt, ein weiteres Gehäuseteil an, das permanent mit der Umgebung vorzugsweise über mindestens eine Durchtrittsöffnung verbunden ist und in das freie Ende der Aufnahmekammer des Aufnahmeteils ausmündet.

Dieses Aufnahmeteil für die Membran kann als Einschraubteil konzipiert und in die Trennwand mittels eines Dichtringes abgedichtet eingeschraubt sein. Weiterhin können der Drucksensor und die Platine in einem Aufnahmebügel oder Aufnahmekorb im Gehäuse gehalten sein.

Gemäß dem Patentanspruch 10 ist Gegenstand der Erfindung auch die Verwendung einer Sensoreinrichtung nach einem der Ansprüche 1 bis 9 bei Tiefwasseranwendungen, insbesondere bei BOPs, mit einem Drucksensor, der zur Messung eines Systemdrucks in einem Gehäuse mit einem inkompressiblen Medium aufgenommen ist, das mittels einer elastischen nachgiebigen Trenneinrichtung im Einsatz dem jeweils herrschenden umgebenden Wasserdruck ausgesetzt ist.

Nachstehend ist die Erfindung anhand eines in der Zeichnung dargestellten Ausführungsbeispiels im Einzelnen erläutert. Es zeigen:
- Fig. 1: eine aufgebrochen und in Längsrichtung geschnitten gezeichnete Vorderansicht einer Drucksensoreinrichtung gemäß dem Stand der Technik;
- Fig. 2: eine in Längsrichtung aufgeschnitten gezeichnete Darstellung eines Ausführungsbeispieles der erfindungsgemäßen Sensoreinrichtung; und
- Fig. 3: eine perspektivische Schrägansicht des Ausführungsbeispieles von Fig. 2.

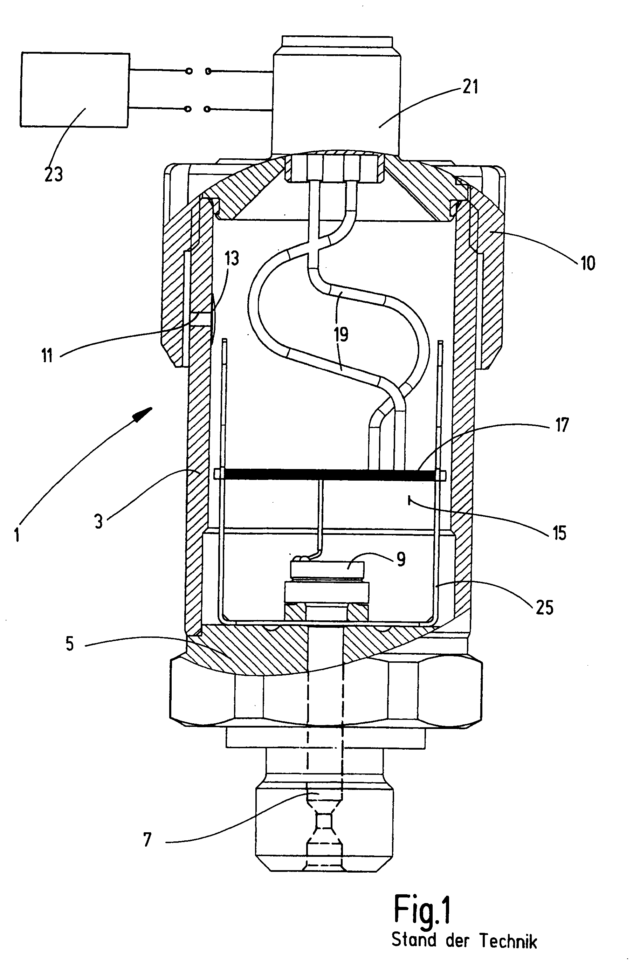

Die Fig. 1 zeigt eine Sensoreinrichtung des Standes der Technik mit einem metallischen Sensorgehäuse 1, das ein kreiszylindrisches Hauptteil 3 aufweist, dessen in Fig. 1 unteres Ende durch ein angeschweißtes Bodenteil 5 abgeschlossen ist. Dieses weist einen zentral gelegenen Druckanschluss 7 auf, über den eine Seite der Druckmesszelle eines Drucksensors 9, der am Bodenteil 5 angeordnet ist, mit dem zu messenden Systemdruck beaufschlagbar ist. Das obere, gegenüberliegende Ende des Gehäusehauptteiles 3 ist mittels einer Schraubkappe 10 fluiddicht verschlossen. In der Wand des Gehäusehauptteiles 3 befindet sich eine zur Umgebung offene Druckausgleichsbohrung 11, die mittels einer gasdurchlässigen, handelsüblichen Be-und Entlüftungsmembran 13 geschlossen ist. Dabei kann es sich um eine handelsübliche, sogenannte DAM-Druckausgleichs-Membran aus PTFE handeln, die selbstklebend an der Innenwand des Gehäusehauptteiles 3 angebracht ist.

Aufgrund des Druckausgleichs über die Bohrung 11 steht die im Gehäuseinneren 15 befindliche Luft oder gegebenenfalls ein anderes gasförmiges Medium, wie Stickstoffgas, unter dem Umgebungsdruck, so dass die Druckmesszelle des Drucksensors 9, die einerseits dem Systemdruck vom Druckanschluss 7 her ausgesetzt ist, andererseits vom Umgebungsdruck beaufschlagt ist und somit lediglich den Systemdruck als Druckdifferenz gegenüber dem Umgebungsdruck erkennt. Der Drucksensor 9 ist an einer Schaltungsplatine 17 angeschlossen ist, von der Verbindungskabel 19 zu einer Anschlusssteckereinheit 21 führen, die wiederum mit einer Auswerteelektronik 23 verbunden ist. Die Steckereinheit 21 ist an der Verschlusskappe 10 in deren Zentralbereich angeordnet. Für die Halterung der Schaltungsplatine 17 ist ein Aufnahmekorb 25 vorgesehen, der an der Innenseite des Bodenteiles 5 festgelegt ist.

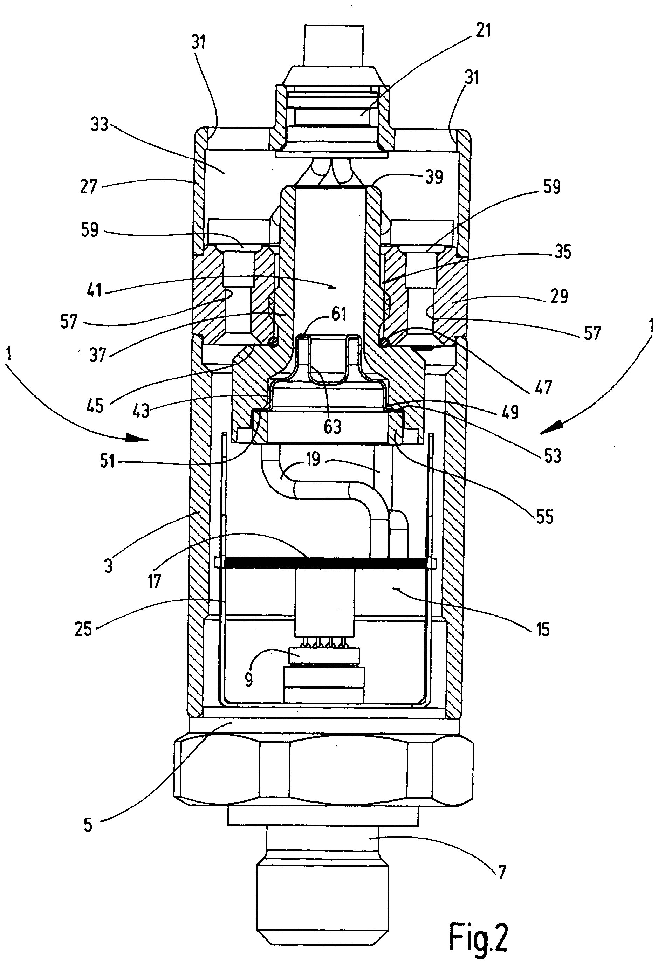

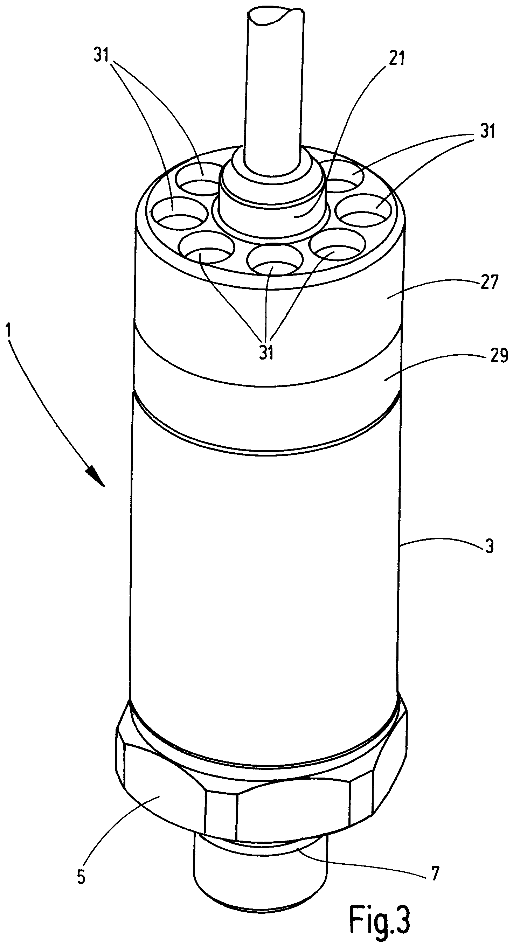

Die Figuren 2 und 3 zeigen ein Ausführungsbeispiel der erfindungsgemäßen Sensoreinrichtung. Wie bei der in Fig. 1 gezeigten, bekannten Einrichtung weist das Sensorgehäuse 1 ein kreiszylindrisches Hauptteil 3 auf, das am in der Zeichnung unten liegenden Ende durch ein angeschweißtes Bodenteil 5 geschlossen ist, an dem ein Druckanschluss 7 für das Druckfluid, dessen Systemdruck zu messen ist, vorgesehen und mit einer Seite der Messzelle des Drucksensors 9 verbunden ist, der, zusammen mit einem Haltekorb 25 für die Schaltungsplatine 17 am Bodenteil 5 angeordnet ist. Zwischen dem oberen Ende des Hauptteiles 3 und einem den oberen Gehäuseabschluss bildenden, metallischen Gehäuseteil 27 befindet sich als drittes metallisches Gehäuseteil eine Trennwand 29, die mit Gehäusehauptteil 3 und Gehäuseteil 27 verschweißt ist. Über Durchtrittsöffnungen 31 ist der Innenraum 33 des endseitigen Gehäuseteils 27 permanent mit der Umgebung verbunden. Die die Durchtrittsöffnungen 31 aufweisende Wand des Gehäuseteils 27 weist, wie es bei der Deckkappe 10 der in Fig. 1 gezeigten, bekannten Lösung der Fall ist, eine Steckereinheit 21 auf, die über Verbindungskabel 19 mit der Schaltungsplatine 17 verbunden ist. Die Kabel 19 sind durch die Trennwand 29 gedichtet hindurchgeführt.

In der Trennwand 29 befindet sich, koaxial zur Gehäuselangsachse, eine durchgehende Gewindebohrung 35, in die ein hülsenartiges Aufnahmeteil 37 derart eingeschraubt ist, dass sein oberes, offenes Ende 39 mit dem den Umgebungsdruck führenden Innenraum 33 des oberen Gehäuseteils 37 in Verbindung ist, so dass das Aufnahmeteil 37 im Inneren eine permanent dem Umgebungsdruck ausgesetzte Aufnahmekammer 41 bildet. Diese weist an dem dem oberen Ende 39 entgegengesetzten Ende eine topfartige Erweiterung 43 auf, an der eine radiale Außenschulter 45 gebildet ist, die bei in die Trennwand 29 eingeschraubtem Aufnahmeteil 37 an der Trennwand 29 anliegt und dort mittels eines Dichtringes 47 abgedichtet ist. In der topfartigen Erweiterung 43 ist eine Rollmembran 49 angeordnet und in der Weise festgelegt, dass der freie Rand 51 der Rollmembran 49 an einer Innenschulter 53 am Öffnungsbereich des Aufnahmeteils 37 mittels eines eingepressten Spannringes 55 festgeklemmt ist. Mittels der ein bewegbares Trennelement bildenden Rollmembran 49 ist dergestalt der den Umgebungsdruck führende Innenraum 33 im Gehäuseteil 27 von dem den Drucksensor 9 aufweisenden, im Gehäusehauptteil 3 befindlichen Innenraum 15 fluiddicht separiert.

In der Trennwand 29 sind Durchgangsöffnungen 57 vorgesehen, die mittels Dichtschrauben 59 fluiddicht verschließbar sind. Über die Durchgangsöffnungen 57 ist der Gehäuseinnenraum 15 mit einem inkompressiblen Medium befüllt, beim Ausführungsbeispiel mit einem mit der Elektronik der Schaltungsplatine 17 kompatiblen Öl, wie Silikonöl oder Trafoöl, dessen Kammerdruck die Messzelle des Drucksensors 9 auf der Seite beaufschlagt, die der vom Systemdruck beaufschlagten, mit dem Druckanschluss 7 verbundenen Seite entgegengesetzt ist. Da die Rollmembran 49 zwischen dem den Umgebungsdruck führenden Raum 33 und dem den Drucksensor 9 enthaltenden Innenraum 15 ein bewegbares nachgiebiges Trennelement bildet, überträgt sie den Umgebungsdruck auf den Kammerdruck des Raums 15. Da die inkompressible Füllung des Raums 15 eine steife Abstützung für die Rollmembran 49 bildet, die sich von ihrem festgelegten Rand 51 entlang der Innenwand der topfartigen Erweiterung 43 des Aufnahmeteils 37 in den verjüngten Teil von deren Aufnahmekammer 41 erstreckt, wo die Rollmembran 49 von einer Umlenkstelle 61 ausgehend, sich eine Art Napf 63 bildend, in Richtung auf den Innenraum 15 erstreckt, bildet die Rollmembran 49 eine sichere Trennstelle, die aufgrund ihrer Nachgiebigkeit den im Raum 33 herrschenden Umgebungsdruck dem am Drucksensor 9 wirksamen Kammerdruck im Innenraum 15 angleicht. Dadurch, dass die Rollmembran 49 sich mit einem Napf 63 in den Innenraum 15 erstreckt, ist durch eine die Länge des Napfs 23 verändernde Membranbewegung, die das Volumen des Innenraumes 15 verändert, ein Volumenausgleich erreichbar, wodurch sichergestellt ist, dass ein gegebenenfalls vorhandenes Defizit der Füllmenge des inkompressiblen Mediums im Raum 15 ausgleichbar ist und die Rollmembran 49 dadurch betriebssicher steif angestützt ist. Wie erwähnt, kann für die fluiddichte Trennung mit Vorteil ein Elastomer, wie Nitril-Butadien-Kautschuk, als Werkstoff für die Rollmembran 49 vorgesehen sein.

## Patentansprüche

1. Sensoreinrichtung, insbesondere für maritime Anwendungen, mit einem Gehäuse (1), das einen Druckanschluss (7) aufweist, der zu einem Drucksensor (9) führt, der mittels einer Übertragungseinrichtung (17, 19) Messdaten übermittelt, und das mindestens eine schließbare Durchgangsöffnung (31) aufweist zum Verbinden der Umgebung mit zumindest Teilen (33) des Gehäuseinneren, in dem der Drucksensor (9) angeordnet ist, wobei der Drucksensor (9) von einem inkompressiblen Medium umgeben ist, das mittels einer elastisch nachgiebigen und mediendichten Trenneinrichtung (49) von der Umgebung separiert ist, **dadurch gekennzeichnet, dass** die Trenneinrichtung in Form einer Rollmembran (49) ausgebildet ist, von der, an einer Umlenkstelle (61) umgelegt, ein napfartiges Innenteil (63) in eine topfartige Erweiterung (43) eines Aufnahmeteils (37) zumindest in einem Ausgangszustand der Membran (49) eingreift.

2. Sensoreinrichtung nach Anspruch 1, **dadurch gekennzeichnet, dass** die Übertragungseinrichtung eine Platine (17) aufweist, an die der Drucksensor (9) angeschlossen ist, sowie Verbindungskabel (19), mit denen die Platine (17) an eine Auswerteeinrichtung (23) anschließbar ist.

3. Sensoreinrichtung nach Anspruch 1 oder 2, **dadurch gekennzeichnet, dass** die als elastisch nachgiebige Rollmembran (49) ausgebildete Trenneinrichtung mit ihrem freien Rand (51) in einer Aufnahmekammer (41) des hülsenförmigen Aufnahmeteils (37) festgelegt ist und dass die Trenneinrichtung permanent dem Umgebungsdruck ausgesetzt ist.

4. Sensoreinrichtung nach einem der vorstehenden Ansprüche, **dadurch gekennzeichnet, dass** das Aufnahmeteil (37) in einer Trennwand (29) des Gehäuses (1) und diese durchgreifend mittig angeordnet ist und dass die Trennwand (29) zumindest eine, vorzugsweise mit einer Dichtschraube (59) verschließbare, Durchgangsöffnung (57) aufweist.

5. Sensoreinrichtung nach Anspruch 4, **dadurch gekennzeichnet, dass** die Verbindungskabel (19) der Übertragungseinrichtung (17, 19) die Trennwand (29) durchgreifen.

6. Sensoreinrichtung nach Anspruch 4 oder 5, **dadurch gekennzeichnet, dass** an die Trennwand (29) des Gehäuses (1), die in Richtung des Drucksensors (9) das Gehäuseinnere (15) mittels der jeweiligen Dichtschraube (59) dichtend abschließt, ein weiteres Gehäuseteil (27) anschließt, das permanent mit der Umgebung vorzugsweise über mindestens eine Durchtrittsöffnung (31) verbunden ist und in das das freie Ende der Aufnahmekammer (41) des Aufnahmeteils (37) ausmündet.

7. Sensoreinrichtung nach einem der Ansprüche 4 bis 6, **dadurch gekennzeichnet, dass** das Aufnahmeteil (37) als Einschraubteil konzipiert in die Trennwand (29) mittels eines Dichtringes (47) abgedichtet eingeschraubt ist.

8. Sensoreinrichtung nach einem der vorstehenden Ansprüche, **dadurch gekennzeichnet, dass** der Drucksensor (9) und die Platine (17) in einem Aufnahmebügel oder Aufnahmekorb (25) im Gehäuse (1) gehalten sind.

9. Verwendung einer Sensoreinrichtung nach einem der vorstehenden Ansprüche bei Tiefwasseranwendungen, insbesondere bei Bohrlochsicherungsgarnituren (engl. blowout preventer), mit dem Drucksensor (9), der zur Messung eines Systemdruckes in dem Gehäuse (1) mit dem inkompressiblen Medium aufgenommen ist, das mittels der elastischen nachgiebigen Trenneinrichtung (49) im Einsatz dem jeweils herrschenden, umgebenden Wasserdruck in einer druckausgeglichenen Kammer (engl. compensated chamber) ausgesetzt ist.

## Claims

1. Sensor device, particularly for maritime applications, with a housing (1) that comprises a pressure port (7), which leads to a pressure sensor (9) which transmits measurement data by means of a transmission device (17, 19), and which comprises at least one closable passage opening (31) to connect the surrounding environment to at least parts (33) of the inside of the housing in which the pressure sensor (9) is arranged, the pressure sensor (9) being surrounded by an incompressible medium, which is separated from the surrounding environment by means of an elastically flexible and media-tight separating device (49), **characterised in that** the separating device is designed in the form of a rolling membrane (49), from which a bowl-like inner part (63), turned at a deflection point (61), engages in a cup-like extension (43) of a receiving part (37) at least in one initial state of the membrane (49).

2. Sensor device according to claim 1, **characterised in that** the transmission device comprises a circuit board (17) to which the pressure sensor (9) is connected, and connecting cables (19) with which the circuit board (17) can be connected to an evaluation device (23).

3. Sensor device according to either claim 1 or claim 2, **characterised in that** the separating device formed as an elastically flexible rolling membrane (49) is fixed with its free edge (51) in a receiving chamber (41) of the sleeve-shaped receiving part (37), and **in that** the separating device is permanently exposed to ambient pressure.

4. Sensor device according to any one of the preceding claims, **characterised in that** the receiving part (37) is arranged in a separating wall (29) of the housing (1) and passing through the middle of said wall, and **in that** the separating wall (29) comprises at least one passage opening (57) which can preferably be locked with a sealing bolt (59).

5. Sensor device according to claim 4, **characterised in that** the connecting cables (19) of the transmission device (17, 19) pass through the separating wall (29)

6. Sensor device according to either claim 4 or claim 5, **characterised in that** a further housing part (27) is connected to the separating wall (29) of the housing (1), said wall sealing the inside (15) of the housing in the direction of the pressure sensor (9) by means of the respective sealing bolt (59), said housing part being permanently connected to the surrounding environment, preferably by means of at least one passage opening (31) and leading into the free end of the receiving chamber (41) of the receiving part (37).

7. Sensor device according to any one of claims 4 to 6, **characterised in that** the receiving part (37), designed as a screw-in part, is screwed into the separating wall (29) by means of a sealing ring (47).

8. Sensor device according to any one of the preceding claims, **characterised in that** the pressure sensor (9) and the circuit board (17) are held in the housing in a receiving bracket or receiving basket (25).

9. Use of a sensor device according to any one of the preceding claims in deepwater applications, particularly in blowout preventers, comprising the pressure sensor (9) which, for the purpose of measuring a system pressure, is received in the housing (1) with the incompressible medium, which is exposed, during use, to the respective prevailing ambient water pressure in a compensated chamber by means of the elastically flexible separating device (49).

## Revendications

1. Dispositif capteur, notamment pour des applications maritimes, comprenant un boîtier (1), qui a un raccord (7) de pression menant à un capteur (9) de pression transmettant des données de mesure au moyen d'un dispositif (17, 19) de transmission et qui au moins une ouverture (31) de passage pouvant être fermée, pour la mise en communication de l'atmosphère ambiante avec au moins des parties (33) de l'intérieur du boîtier, dans lequel le capteur (9) de pression est disposé, dans lequel le capteur (9) de pression est entouré d'un fluide incompressible, qui est séparé de l'atmosphère ambiante au moyen d'un dispositif (49) de séparation cédant élastiquement et étanche aux fluides, **caractérisé en ce que** le dispositif de séparation a la forme d'une membrane (49) roulante, de laquelle, repliée en un point (61) de renvoi, une partie (63) intérieure de type en godet pénètre, au moins dans un état initial de la membrane (49), dans un élargissement (43) de type en cuvette d'une partie (37) de réception.

2. Dispositif capteur suivant la revendication 1, **caractérisé en ce que** le dispositif de transmission a une platine (17), à laquelle le capteur (9) de pression est raccordé, ainsi qu'un câble (19) de liaison, par lequel la platine (17) peut être raccordée à un dispositif (23) d'analyse.

3. Dispositif capteur suivant la revendication 1 ou 2, **caractérisé en ce que** le dispositif de séparation, constitué sous la forme d'une membrane (49) roulante cédant élastiquement, est fixé par son bord (51) libre à une chambre (41) de réception de la partie (37) de réception en forme de manchon, et **en ce que** le dispositif de séparation est soumis en permanence à la pression ambiante.

4. Dispositif capteur suivant l'une des revendications précédentes, **caractérisé en ce que** la partie (37) de réception est disposée dans une cloison (29) du boîtier (1) et en la traversant au milieu et **en ce que** la cloison (29) a au moins une ouverture (57) de passage pouvant être fermée, de préférence par une vis (59) d'étanchéité.

5. Dispositif capteur suivant la revendication 4, **caractérisé en ce que** le câble (19) de liaison du dispositif (17, 19) de transmission traverse la cloison (29).

6. Dispositif capteur suivant la revendication 4 ou 5, **caractérisé en ce qu'**à la cloison (29) du boîtier (1), qui ferme, d'une manière étanche dans la direction du capteur (9) de pression, l'intérieur (15) du boîtier au moyen de la vis (59) respective d'étanchéité, se raccorde une autre partie (27) du boîtier, qui communique en permanence avec l'atmosphère ambiante, de préférence par au moins une ouverture (31) de passage et dans laquelle débouche l'extrémité libre de la chambre (41) de réception de la partie (37) de réception.

7. Dispositif capteur suivant l'une des revendications 4 à 6, **caractérisé en ce que** la partie (37) de réception est vissée d'une manière étanche, en étant conçue sous la forme d'une partie à visser, dans la cloison (29) au moyen d'un joint (47) .

8. Dispositif de capteur suivant l'une des revendications précédentes, **caractérisé en ce que** le capteur (9) de pression et la platine (17) sont retenus dans un étrier de réception ou dans un panier (25) de réception du boîtier (1) .

9. Utilisation d'un dispositif capteur suivant l'une des revendications précédentes dans des applications en eaux profondes, notamment dans des garnitures de sécurité de puits de forage (en anglais : blowout preventer), avec le capteur (9) de pression, qui pour la mesure d'une pression du système est reçu dans le boîtier (1) avec le fluide incompressible, lequel est soumis, au moyen du dispositif (49) de séparation cédant élastiquement, en utilisation, à la pression de l'eau régnante environnante dans une chambre de compensation de la pression (en anglais : compensated chamber).
